# EUROPÄISCHE PATENTSCHRIFT

(11) **EP 1 058 640 B1**
(45) Veröffentlichungstag und Bekanntmachung des Hinweises auf die Patenterteilung: **17.04.2002**
(21) Anmeldenummer: 99910263.5
(22) Anmeldetag: 23.02.1999
(51) Int. Cl.: B62D 65/00, B65G 47/22

(54) **VORRICHTUNG ZUM AUTOMATISIERUNGSGERECHTEN, TYPFLEXIBLEN POSITIONIEREN VON AUF DEN EIGENEN RÄDERN STEHENDEN FAHRZEUGEN**
DEVICE FOR POSITIONING VEHICLES STANDING ON THEIR OWN WHEELS IN A MANNER WHICH IS SUITABLE FOR AUTOMATION AND FOR VEHICLES OF DIFFERENT TYPES
DISPOSITIF DE POSITIONNEMENT FLEXIBLE ET CONFORME A L'AUTOMATISATION DESTINE A VEHICULES POSES SUR LEURS PROPRES ROUES

(30) Priorität: 05.03.1998 DE 19809515
(43) Veröffentlichungstag der Anmeldung: 13.12.2000
(73) Patentinhaber: DaimlerChrysler AG, 70567 Stuttgart (DE)
(72) Erfinder: HABISREITINGER, Uwe, D-72250 Freudenstadt (DE); NORDMANN, Bernhard, D-71034 Böblingen (DE)
(86) Internationale Anmeldenummer: EP9901167
(87) Internationale Veröffentlichungsnummer: WO9944879

(56) Entgegenhaltungen:
- DE-A- 3 147 784
- FR-A- 2 399 370
- US-A- 5 651 319
- PATENT ABSTRACTS OF JAPAN vol. 009, no. 164 (M-395), 10. Juli 1985 (1985-07-10) & JP 60 040311 A (MAZDA KK), 2. März 1985 (1985-03-02)
- PATENT ABSTRACTS OF JAPAN vol. 005, no. 097 (M-075), 24. Juni 1981 (1981-06-24) & JP 56 043069 A (DAIFUKU CO LTD), 21. April 1981 (1981-04-21)

## Beschreibung

Die Erfindung geht aus von einer Vorrichtung zum intermittierenden Befördern und Positionieren von auf den eigenen Rädern rollenden Fahrzeugen innerhalb einer Bearbeitungslinie nach dem Oberbegriff von Anspruch 1, wie sie beispielsweise aus der industriellen Serienfertigung von Personenkraftwagen und aus der gattungsgemäßen US 5 651 319 A bekannt ist.

Im Endmontagebereich von Personenkraftwagen ist es nach der Fahrwerksmontage - von da ab stehen die Fahrzeuge auf den eigenen Rädern - üblich, die Fahrzeuge mittels Plattenbänder oder auf Kufen oder mittels Schleppketten durch die sich daran anschließenden Montagebereiche zu fördern. Bei einer Förderung der Fahrzeuge mittels Schuppen- oder Plattenbändern stehen diese mit den Fahrzeugrädern auf zwei Schuppen- oder Plattenbändern, die entsprechend der Spurweite der Fahrzeugräder parallel nebeneinander im Boden der Arbeitslinie verlegt sind und langsam angetrieben werden, wobei die einzelnen Platten oder Schuppen sich über Rollen am Untergrund abstützen können, so daß der Platten- oder Schuppenverbund trotz der Belastung einzelner Platten- oder Schuppen durch die auflastenden Fahrzeuge leicht voranbewegt werden kann.

Beim Kufentransport stehen die Fahrzeuge mit den beiden linken und mit den beiden rechten Rädern jeweils auf einer im Profil U-förmigen, sich über die gesamte Fahrzeuglänge erstreckende Schiene, den beiden Kufen. Diese Kufen werden durch rechts und links im Boden verlegte Plattenbänder oder jeweils eine dichte Folge von antreibbaren Förderrollen entlang der Arbeitslinie bewegt. Der Kufentransport hat den Vorteil, daß die auf Kufen stehenden Fahrzeuge in entsprechenden Versetzeinrichtungen quer versetzt oder um eine vertikale Achse gedreht werden können. Die Fahrzeuge sind also auf Kufen stehend universeller handhabbar, als wenn sie unmittelbar auf den eigenen Räder stehend durch Schuppen- oder Plattenbänder oder durch Schleppketten gefördert werden.

Beim Schleppkettentransport rollen die Fahrzeuge auf ihren eigenen Rädern entlang von Abrollspuren durch die Bearbeitungslinie, wobei entlang der Abrollspur einer Fahrzeugseite eine Schleppkette oder ein Paar von Schleppketten etwa im Abstand einer Radbreite angeordnet sind. Die Schleppketten sind mit Mitnehmern versehen, die sich schubwirksam an ein Fahrzeugrad anlegen und das Fahrzeug durch die Bearbeitungslinie hindurch befördern.

Die mit diesen Fördertechniken beförderten Fahrzeuge kommen in den einzelnen Arbeitsstationen nicht lagedefiniert zum Stillstand. Mit Lagetoleranzen eines bestimmten Karosseriepunktes von ± 10 bis 20 cm in Längs- und/oder in Querrichtung muß im Einsatzbereich dieser Fördertechniken gerechnet werden. Diese große Lagestreuung ist für den Einsatz von automatisiert und mechanisiert durchzuführenden Arbeitsumfängen nicht zulässig, die eine Kenntnis der exakten Ist-Position in allen drei Raumlagen voraussetzen. Um bei einer so starken Lagestreuung der Fahrzeuge eine genaue Ist-Position ermitteln zu können, müßte zunächst die ungefähre Ist-Position des Fahrzeugs jeweils mittels eines vorgeschalteten Meßschrittes ermittelt werden; das Fahrzeug müßte gewissermaßen erst "gesucht" werden. Erst dann könnte sich ein genaueres Meßprogramm mit aufwendiger Sensorik zur Ermittlung der genauen Istposition anschließen. Da überdies für die dabei eingesetzten Meßsysteme geeignete Fix- oder Referenzpunkte an der Außenhaut der Fahrzeuge fahrzeugtyp-abhängig variieren und selber auch gewissen Toleranzen unterliegen, wäre es neben dem Zeit- und Investitionsaufwand auch vom Ergebnis her problematisch, auf diese Art die Ist-Position der Fahrzeuge in den einzelnen Arbeitsstationen jeweils genau erfassen zu wollen. Die Produktivität, die ja durch den Einsatz von Automatisierungstechniken gerade gesteigert werden soll, würde unter dem Zeitaufwand für eine Ermittlung der genauen Ist-Position stark leiden. U.U. würde die durch die automatisiert erledigte Arbeit gegenüber der Handarbeit gewonnene Zeit durch den Zeitaufwand für das Erfassen der Ist-Position mehr oder weniger verbraucht, so daß sich eine Automatisierung nicht lohnt.

In den der Fahrwerksmontage vorgelagerten Montagebereichen, in denen verschiedene Arbeitsumfänge automatisiert und mechanisiert durchgeführt werden, werden die Fahrzeugkarosserien in den einzelnen Arbeitsstationen üblicherweise jeweils mittels Zentrierkonen, die in karosserieseitige Referenzbohrungen einfahren, und mittels einer Hubvorrichtung aus den Förderschlitten ausgehoben und sehr rasch in eine durch Anschläge exakt definierte Raumlage gebracht. Diese Technik ist jedoch nicht in den Montagebereich nach der Fahrwerksmontage übertragbar, da in diesem späteren Montagestadium am Fahrzeugboden keine unterseitig zugänglichen, räumlich exakt definierten Aufnahmemöglichkeiten der Fahrzeuge mehr vorhanden sind und die ehemals freien Zentrieraufnahmen nun mit typspezifisch unterschiedlichen Bauteilen überbaut und/oder verschlossen sind.

Aufgabe der Erfindung ist es, die gattungsgemäß zugrunde gelegte Vorrichtung dahingehend zu verbessern, daß auf den eigenen Rädern rollende Fahrzeuge unterschiedlichen Typs automatisierungsgerecht und typflexibel innerhalb einer Arbeitsstation einer Bearbeitungslinie in Förderrichtung und quer dazu rationell und genau positioniert sowie ausgerichtet werden können. Mit "genau" soll ein relativ kleiner Toleranzbereich der LagePositionierung umrissen werden, innerhalb dessen gewisse Arbeitsoperationen ohne weiteres mechanisiert durchgeführt werden können oder bei der das Fahrzeug über Wagenheber-Ansatzpunkte oder ähnliche Punkte am Fahrzeug durch eine ortsfeste Vorrichtung innerhalb der Arbeitsstation sehr rasch mechanisch noch genauer ausgerichtet und fixiert werden kann.

Diese Aufgabe wird bei Zugrundelegung der gattungsgemäßen Vorrichtung erfindungsgemäß durch die kennzeichnenden Merkmale von Anspruch 1 gelöst.

Erfindungsgemäß wird das Fahrzeug innerhalb einer Arbeitsstation bezüglich der Längs- und der Querrichtung anhand der Reifen positioniert. Für die Positionierung in Längsrichtung ist ein Paar von prismatischen Radmulden vorgesehen, in welchen die Fahrzeugräder in Längsrichtung positionsgenau aber in Querrichtung schwimmend aufgenommen werden. Selbst bei in der Praxis vorkommenden unterschiedlichen Radgrößen wird durch diese Anordnung eine Längspositionierung der zugehörigen Fahrzeugachse an stets derselben Stelle, nämlich mittig oberhalb der Radmulden erreicht. Quer zur Förderrichtung sind die Fahrzeuge durch die in Querrichtung schwimmende Auflagerung der Fahrzeugräder sowie durch einen mittels Zentrierborden an den Reifenflanken angreifenden, im Boden der Arbeitsstation versenkt angeordneten Zentriermechanisms exakt auf die Mitte der Förderlinie zentrierbar. Durch eine mittige Zentrierung der Fahrzeuge wird eine unabhängig von Spurbreite und Radbreite gleichbleibende Querpositionierung erzielt. Durch die Anlage der Zentrierborde lediglich an der Reifenflanke wird eine Berührung bzw. Beschädigung der Felgen ausgeschlossen. Durch die erfindungsgemäße Positionierung der Fahrzeuge kann eine Lagetoleranz der Fahrzeuge von etwa ± 5 mm in Längs- und Querrichtung ohne weiteres erreicht werden. Diese Genauigkeit wird bei Einhaltung gewisser grober Fülldruck-Toleranzen für alle Reifen nicht durch unterschiedlichen Luftdruck in den Reifen beeinträchtigt. Aufgrund der raschen und genauen Positionierung der in eine neue Arbeitsstation beförderten Fahrzeuge eröffnet die Erfindung Möglichkeiten zum Einsatz von Automatisierungstechniken in der Endphase der Endmontage von Fahrzeugen.

Bei lenkbaren Achsen sollten die Zentrierborde zweckmäßigerweise schwenkbar am zugehörigen Zentriermechanismus gelagert sein, damit die Zentrierborde sich verkantungsfrei an die Reifenflanken anlegen können und beim Zentrieren des Fahrzeuges nicht etwa eine Krafteinwirkung auf die Fahrzeuglenkung ausgeübt wird. Unterschiedliche, typspezifische Achsabstände werden durch entsprechend lange Tragrollen bzw. schwimmend gelagerte Aufnahmeflächen berücksichtigt.

Weitere zweckmäßige Ausgestaltungen der Erfindung können den Unteransprüchen entnommen werden; im übrigen ist die Erfindung anhand eines in der Zeichnung dargestellten Ausführungsbeispieles nachfolgend noch erläutert; dabei zeigen:
- Fig. 1: einen vertikalen Längsschnitt durch ein erstes Ausführungsbeispiel einer Fördereinrichtung zum intermittierenden Befördern von auf ihren Rädern rollenden Fahrzeugen im Bereich einer Arbeitsstation unter Einsatz eines Schleppkettenförderers,
- Fig. 2: einen vertikalen Querschnitt durch die Fördereinrichtung nach Figur 1,
- Fig. 3: einen vertikalen Längsschnitt durch eine Arbeitsstation mit einer Vorrichtung zum exakten Positionieren eines auf seinen Rädern rollenden Fahrzeugen als einem weiteren Ausführungsbeispiel,
- Fig. 4: eine Grundrißdarstellung der Vorrichtung in der Arbeitsstation nach Figur 3,
- Fig. 5 und 6: einen vertikalen Querschnitt durch (Figur 5) bzw. eine Ansicht von oben auf (Figur 6) ein Paar von Radaufstandsplatten einer Arbeitsstation mit zugehörigem Zentriermechanismus als einem dritten Ausführungsbeispiel,
- Fig. 7: einen vertikalen Längsschnitt durch eine Arbeitsstation mit Mitteln zum Positionieren von Fahrzeugen als einem vierten Ausführungsbeispiel,
- Fig. 8: einen vertikalen Längsschnitt durch eine Radmulde, deren geneigte Flanken in Form von schwenkbaren Klappen ausgebildet sind,
- Fig. 9: ein weiteres Ausführungsbeispiel eines Zentriermechanismus' zum mittigen Ausrichten einer Fahrzeugachse in Einzeldarstellung und
- Fig. 10: ein weiteres Ausführungsbeispiel der Erfindung unter Verwendung eines Plattenbandes mit beweglichen, in den Gliederverband des Plattenbandes inegrierten Radmulden und Radaufstandsplatten.

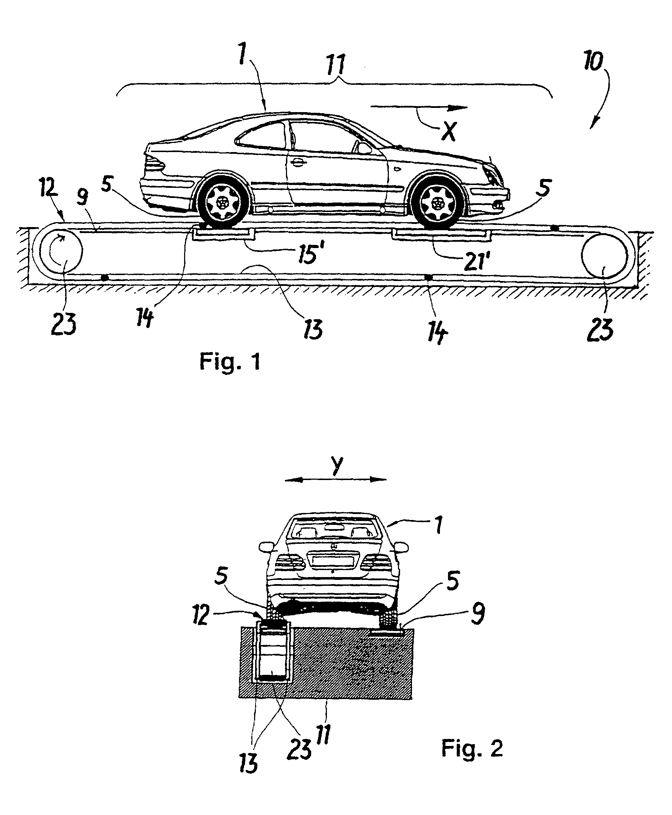

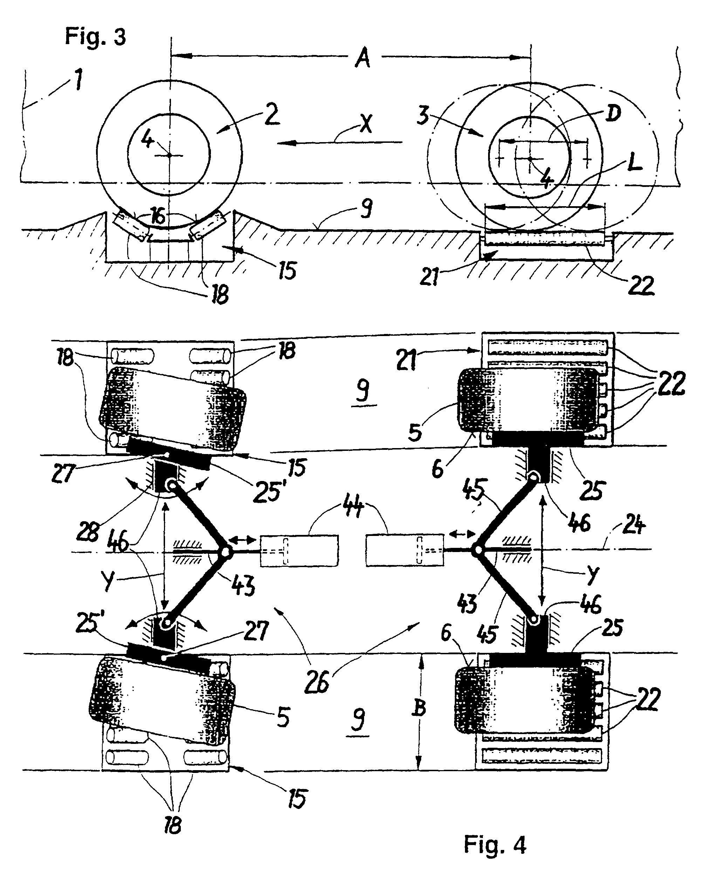

Die Erfindung ist in den dargestellten Ausführungsbeispielen in zwei unterschiedlichen Basisversionen gezeigt, die sich durch die Art der Förderstränge 12 bzw. 12' unter den Fahrzeugrädern 5 unterscheiden. Zum einen sind mehrere Ausführungsbeispiele dargestellt, die eine Schleppkettenförderung der Fahrzeuge zeigen (Figur 1 und 2) oder voraussetzen (Figur 3 bis 8). Bei Schleppkettenförderung der Fahrzeuge ist einer der Förderstränge 12 als eine Abrollspur 9 ergänzt durch einen Schleppkettenförderer 13, 14, 23 ausgebildet, wogegen auf der anderen Fahrzeugseite kein Förderstrang, sondern allein eine Abrollspur 9 vorgesehen ist. Auf den Abrollspuren 9 können die Fahrzeugräder frei abrollen. Die Radmulden und Radaufstandsplatten sind hier den einzelnen Arbeitsstationen 11 stationär zugeordnet.

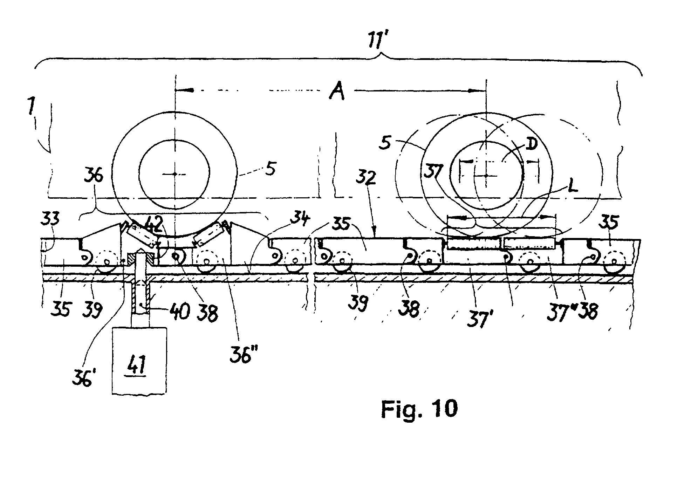

Beim Ausführungsbeispiel nach Figur 10 sind die Förderstränge 12' unter den Fahrzeugrädern einer jeden Fahrzeugseite jeweils als Plattenbandförder ausgebildet. Die Fahrzeugräder stehen auf Radmulden 36 bzw. Radaufstandsplatten 37, die in den Gliederverbund der beweglichen Plattenbänder integriert sind. Durch positionsgerechtes Stillsetzen der Plattenbänder werden nach jedem Förderhub die Radmulden 36 und Radaufstandsplatten 37 in den einzelnen Arbeitsstationen 11' jeweils erneut positioniert.

Zunächst sei näher auf die Ausführungsbeispiele mit Schleppkettenförderung eingegangen, von denen eines in den Figuren 1 und 2 in einer umfassenderen Darstellung gezeigt ist. Generell handelt es sich dabei um eine Vorrichtung zum intermittierenden Befördern und Positionieren von auf den eigenen Rädern 5 rollenden Fahrzeugen 1 entlang einer Bearbeitungslinie 10, die beim dargestellten Ausführungsbeispiel eine Arbeitsstation 11 umfaßt. Die Fahrzeuge einer Bearbeitungslinie vollführen aufgrund der Förderstränge gemeinsam einen Förderhub entsprechend dem Stationenabstand und werden zur Durchführung von Arbeiten wieder angehalten und positioniert. Dazu sind parallel nebeneinander zwei Abrollspuren 9 für die Fahrzeugräder 5 vorgesehen, die in einem der Spurweite S der Fahrzeuge 1 entsprechenden Abstand angeordnet sind. Einer Abrollspur ist ein Paar von Schleppketten 13 zugeordnet, die über Umlenkrädern 23 in einer endlosen Schlaufe verlegt und in Förderrichtung X angetrieben sind. Das Schleppkettenpaar ist mit ihrem oberen, der Abrollspur folgenden Trumm bodennah verlegt. Im übrigen sind die Schleppketten mit mehreren Mitnehmern 14 versehen, von denen jeweils ein Mitnehmer am Umfang eines Fahrzeugreifens 5 eines zu befördernden Fahrzeuges 1 schubwirksam anlegbar ist. Die Mitnehmer können als ein Dreifachsatz von parallelen, sich berührenden und drehbar gelagerten Rollen oder Walzen audgebildet sein, von denen eine Rolle an der Abrollspur und die beiden anderen am Reifenumfang abrollen.

Um auf den eigenen Rädern rollende Fahrzeuge unterschiedlichen Typs automatisierungsgerecht und typflexibel innerhalb einer Arbeitsstation 11 der Bearbeitungslinie in Förderrichtung X und in Querrichtung Y exakt und rationell positionieren sowie ausrichten zu können, ist erfindungsgemäß ein Bündel von Maßnahmen vorgesehen.

In jeder Abrollspur 9 ist im Bereich der Arbeitsstationen 11 je eine prismatische mittensymmetrische Radmulde 15' mit Mittellinie 31 angeordnet. Weiter unten werden Radmulden in mehreren Ausführungsbeispielen näher vorgestellt. Die Radmulden sind quer zur Förderrichtung X orientiert und in den Abrollspuren 12 untereinander bezüglich der Förderrichtung positionsgleich angeordnet. Sie sind entsprechend der Sollposition des Fahrzeuges 1 bzw. der betreffenden Fahrzeugachse 2, 3 innerhalb der Arbeitsstation 11 stationär angeordnet. Im Querschnitt sind sie so geformt, daß darin jeweils die verschieden großen Fahrzeugreifen 5 aller in der Bearbeitungslinie 10 vorkommenden Fahrzeugtypen positionsgenau aufnehmbar sind. Die Radmulden sind in allen Ausführungsbeispielen derart ausgebildet, daß der Fahrzeugreifen 5 des darin aufgenommene Fahrzeugrades in Querrichtung Y verschiebbar abgestützt ist.

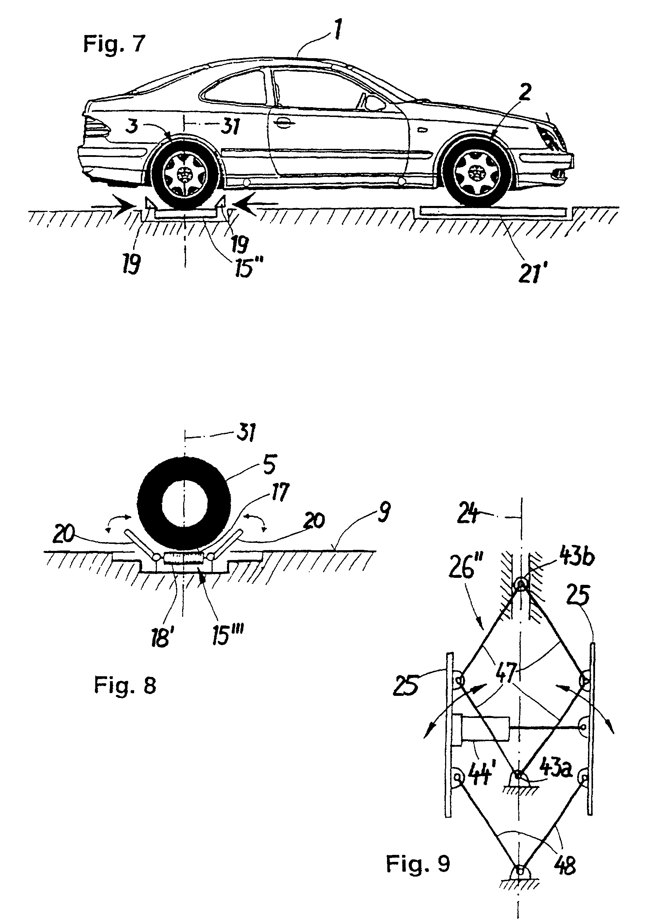

In einem dem Achsabstand A der Fahrzeuge entsprechenden Längsabstand von den Radmulden sind in den Abrollspuren 9 ferner Radaufstandsplatten 21 vorgesehen, die durch eine Schar von parallelen, mit den Drehachsen in Förderrichtung X ausgerichteten Tragrollen 22 gebildet sind (Figur 3, 4 oder Figur 5, 6). Alternativ können die Radaufstandsplatten 21' auch als eine quer schwimmend geführte Platte ausgebildet sein (Figur 1 oder 7). Die Radaufstandsplatten 21, 21' decken die verschiedenen Achsabstände A aller in der Bearbeitungslinie 10 vorkommenden Fahrzeugtypen ab. Dies ist bei den dargestellten Ausführungsbeispielen trotz ortsfester Anordnung der Radaufstandsplatten dadurch gelöst, daß sie in Förderrichtung X länger bemessen sind (Maß L), als der Radaufstandsfläche zuzüglich der Differenz D zwischen größtem und kleinstem vorkommenden Achsabstand A entspricht.

Um auch alle Spurweiten S und Radbreiten b aller in der Bearbeitungslinie 10 vorkommenden Fahrzeugtypen abdecken zu können, sind die in Querrichtung Y gemessene Breite der Abrollspuren 9, die Breite B der Radmulden und die Breite der Radaufstandsplatten unter Berücksichtigung ihres gegenseitigen Querabstandes jeweils so groß bemessen, daß die genannten Elemente trotz ihrer ortsfesten Anordnung in den Arbeitsstationen den auftretenden oder potentiell möglichen Bereich von Spurweiten und Reifenbreiten ohne weiteres überdecken können.

Zum Zentrieren sind den beiden gegenüberliegenden Radmulden und den beiden Radaufstandsplatten einer jeden Arbeitsstation 11 jeweils ein Paar von beweglich geführten, längs ausgerichteten Zentrierborden 25 bzw. 25' zugeordnet, die das Abrollniveau der Abrollspuren 9 überragen. Sie sind an spiegelbildlichen Flanken 6 der Fahrzeugreifen 5 eines in der Arbeitsstation aufgenommenen Fahrzeuges anlegbar; dargestellt ist die aus Platzgründen zweckmäßige innenseitige Anlage der Zentrierborde. Dazu sind die Zentrierborde 25 und 25' jeweils in einem solchen gegenseitigen Querabstand angeordnet, daß sie an die innenseitigen Reifenflanken 6 zentrierend anlegbar und zum Zentrieren der Fahrzeugräder 5 von der Mitte 24 weg nach außen verfahrbar sind. Die den Radaufstandsplatten zugeordneten Zentrierborde 25 sind unbeweglich mit dem zugehörigen Zentriermechanismus verbunden, auf den weiter unten näher eingegangen wird. Ferner sind die den Radaufstandsplatten zugeordneten Zentrierborde 25 annähernd so lang wie die Radaufstandsplatten (Maß L). Die Höhe der Zentrierborde ist so gewählt, daß sie - selbst im Falle von Niederquerschnittreifen - die Felge des Fahrzeugrades nicht berühren, so daß es dort nicht zu Beschädigungen kommen kann.

Die nicht-lenkbaren Räder sind - abgesehen von einer geringfügigen und im übrigen zu beseitigenden Schiefstellung des Fahrzeuges auf den Abrollspuren - gut in Förderrichtung X ausgerichtet. Hingegen sind die der lenkbaren Fahrzeugachse 2 zugeordneten Zentrierborde 25' um eine vertikale Schwenkachse 27 schwenkbar an dem zugehörigen Zentriermechanismus 26 gehaltert, damit sie bei schräg stehenden lenkbaren Fahrzeugrädern sich nicht kantig an den Reifenflanken anlegen, sondern sich selbsttätig an die Reifenflanke anschmiegen können. Dadurch kann eine Fehlpositionierung vermieden werden. Die genannte Schwenkachse 27 ist - im Grundriß gesehen - etwa auf der Position der quer verlaufenden Mittellinie 4 der lenkbaren Fahrzeugachse 2 des positioniert aufgenommenen Fahrzeuges 1 angeordnet.

Im Bewegungsantrieb eines jeden Paares von Zentrierborden 25, 25' ist jeweils ein Zentriermechanismus vorgesehen, der weiter unten in mehreren Ausführungsbeispielen vorgestellt wird. Mit dem Zentriermechanismus können die beiden gegenüberliegenden Zentrierborde quer, also in Richtung Y zwangssynchron und spiegelsymmetrisch zur Mittellinie 24 der Bearbeitungslinie 10 verfahren und mit ihm das Fahrzeug über die Reifen symmetrisch und parallel zur Mittellinie 24 der Bearbeitungslinie ausgerichtet werden.

Bevor auf die Vorgehensweise beim Positionieren der beförderten Fahrzeuge näher eingegangen wird, seien vorher noch weitere Einzelheiten der Ausführungsbeispiele geschildert, die relevant für die Verfahrensabfolge beim Positionieren sind.

Wie bereits erwähnt, gibt es unterschiedliche Ausgestaltungsmöglichkeiten für die Radmulden. Grundsätzlich sind sie im Querschnitt prismatisch und symmetrisch mit einem horizontalen Boden und geneigten Flanken aufgebaut. Die Unterschiede rühren daher, ob die Radlast von den beiden geneigten Muldenflanken 16 oder von dem horizontalen Boden 17 aufgenommen wird.

Bei dem in den Figuren 3 und 4 dargestellten Ausführungsbeispiel der Radmulden 15 nehmen die geneigten Flanken 16 die Radlast auf. Die Flanken sind demgemäß bezüglich ihrer Neigung und/oder ihres gegenseitigen Abstandes unbeweglich angeordnet. Um das darin aufgenommene Fahrzeugrad leicht in Y-Richtung verschieben und so das Fahrzeug zentrieren zu können, sind die geneigten Flanken 16 durch eine Schar von parallelen Tragrollen 18 gebildet, deren Drehachsen - im Grundriß gesehen - parallel zur Förderrichtung X ausgerichtet sind. Es sollte einerseits eine möglichst große Anzahl von Tragrollen vorgesehen werden, damit das in der Radmulde aufgenommene Rad sich leicht darauf verschieben läßt. Dies bedeutet einen geringen gegenseitigen Abstand und somit auch einen geringen Durchmesser der Tragrollen. Andererseits können die Tragrollen aus Gründen einer ausreichenden Stabilität nicht beliebig klein gemacht werden. Hier muß der Konstrukteur einen gangbaren Kompromiß finden.

Statt einer Ausbildung der die Radlast aufnehmenden, geneigten Flanken der Radmulden in Form einer Schar von Tragrollen ist es auch denkbar, die Muldenflanken als quer schwimmend geführte Platten auszubilden. Hierbei handelt es sich um Stahlplatten, die an ihren quer liegenden Seitenränder unterseitig mit staubgeschützten, linearen Wälzlagerführungen versehen sind, die einerseits eine leichtgängige Querführung des aufgenommenen Rades und andererseits eine flächig zusammenhängende Aufstandsfläche des Reifens (sog. Reifenlatsch) auf den geneigten Platten ermöglichen. Damit nach jedem neuen Aufsetzen eines Fahrzeugrades auf eine quer schwimmend gelagerte Platte genügend Verfahrspielraum nach rechts und nach links für einen Positioniervorgang in Querrichtung vorhanden ist, ist jede Platte mit einer Zentrierfeder ausgerüstet, die die schwimmend gelagerte Platte nach Entlastung wieder in eine Mittelstellung zurückführt, so daß ein neu aufsetzendes Rad stets auf eine in der Mittelstellung innerhalb ihres Verfahrspieles befindliche Platte aufsetzen kann.

Das in den Figuren 3 und 4 gezeigte Ausführungsbeispiel eines Paares gegenüberliegender Radmulden mit unbeweglich angeordneten, Radlast-aufnehmenden Flanken 16 hat den Vorteil, daß die Reifen der betreffenden Fahrzeugachse nach dem Einrollen der Fahrzeugachse in die beiden gegenüberliegenden Radmulden in Längsrichtung X selbsttätig positioniert ist. Es ist dazu nichts weiter zu veranlassen. Nachteilig ist ein eine gewisse Unebenheit der Abrollspuren im Bereich der Radmulden, die ein ruckfreies Transportieren der hintereinander folgenden, von der Schleppkette beförderten Fahrzeuge u.U. stören kann. Nachdem bei der Ausführung der Radmulden nach den Figuren 3 und 4 das Fahrzeug nach dem Einrollen der betreffenden Fahrzeugachse in die zugehörige Radmulde bereits in Längsrichtung X positioniert ist, braucht es lediglich noch durch Betätigen des Zentriermechanismus und Anlegen der Zentrierborde an die innenliegenden Seitenflanken in Querrichtung Y parallel und symmetrisch zur Mittellinie 24 der Arbeitsstation ausgerichtet und zentriert werden. Bei den Radmulden nach den Figuren 3 und 4 erfolgt also eine Positionierung des Fahrzeuges zuerst in Längs- und danach in Querrichtung.

Bei dem in Figur 7 gezeigten Ausführungsbeispiel einer Radmulde 15" sind die Flanken bezüglich ihres gegenseitigen Abstandes beweglichen ausgebildet. Die Radlast wird in dieser Radmulde vom horizontalen Boden 17 aufgenommen, der als quer schwimmend geführte Platte ausgebildet ist. Die konstruktive Ausbildung einer solchen Platte ist völlig analog zu dem, was weiter oben im Zusammenhang mit der anderen Radmulde nach den Figuren 3 und 4 bereits erwähnt worden war. Die Muldenflanken nehmen hier keine Radlast auf, sondern allenfalls Kräfte zum Positionieren des Fahrzeugrades in die Sollposition. Die Muldenflanken sind hier demgemäß verschiebbar ausgebildet und beim Ausführungsbeispiel nach Figur 7 als ein Paar von im Querschnitt dreieckige Leisten oder Keile 19 ausgebildet, die - nachdem das Fahrzeugrad im Zwischenraum zwischen den Keilen zum Stehen gekommen ist - zwangssynchron und symmetrisch in Richtung der parallel zur X-Richtung orientierten Pfeile zusammengefahren werden und dabei das Fahrzeugrad in X-Richtung positionieren. Die Keile 19 sind währen des Transportes des Fahrzeuges bis in die annähernde Position aus dem Bereich der Abrollspuren herausgerückt, so daß die Räder die Radmulden behinderungsfrei überollen können. Die beiden leistenartigen Keile 19 können währen des Transportes der Fahrzeuge seitlich aus dem Bereich der Abrollspuren - vorzugsweise zur Mitte 24 hin - weggezogen werden. Zweckmäßiger weil mit kürzeren Bewegungshüben verbunden, erscheint ein Absenken der leistenartigen Keile 19 unterhalb des Abrollniveaus der Abrollspuren in kleine Nischen vor und hinter der schwimmenden Platte des Muldenbodens.

Zum Positionieren des Fahrzeuges in der Arbeitsstation nach Figur 7 wird wegen der anderen Ausbildung der Radmulden umgekehrt wie weiter oben im Zusammenhang mit Figur 3 und 4 beschrieben, vorgegangen. D.h. das in die Arbeitsstation eingeschleppte Fahrzeug 1 wird dort nur grob in Längsrichtung durch rechtzeitiges Anheben der leistenartigen Keile 19 oberhalb des Abrollniveaus der Abrollspuren vorpositioniert Und zwar erfolgt das Anheben der Keile 19 gerade dann, wenn die der Radmulde zugeordnete Achse, hier die nicht lenkbare Achse 3, gerade die Radmulde 15" erreicht hat,. Anschließend wird das grob vorpositionierte Fahrzeug in Querrichtung Y exakt zentriert und ausgerichtet und danach erst in Längsrichtung X fein-positioniert, indem die leistenartigen Keile 19 in Richtung der Pfeile zwandssynchron und symmetrisch zur Mittellinie der Radmulde durch einen geeigneten Zentriermechanismus zusammengefahren werden. Dadurch werden die in der Radmulde 15" zunächst nur grob vorpositioniert stehenden Fahrzeugräder zur Mittellinie 31 der Radmulde hin bewegt und dort lagegenau fixiert. Es wird nun auch verständlich, daß es bei dieser Art von Radmulde zweckmäßiger ist, die Längspositionierung zuletzt vorzunehmen, weil nämlich nach dem Längspositionieren die leistenartigen Keile 19 mit einer gewissen Vorspannung am Reifenumfang anliegen und ein Querverschieben danach nur mit erhöhtem Widerstand möglich wäre.

Das in Figur 8 einzeln dargestellte weitere Ausführungsbeispiel einer Radmulde 15, folgt ebenfalls dem Prinzip der Radmulde 15" nach Figur 7, bei der die Radlast vom Boden 17 der Radmulde 15, aufgenommen wird. Allerdings ist hier der Boden durch eine Schar von parallelen Tragrollen 18' gebildet, deren Drehachsen parallel zur Förderrichtung ausgerichtet sind. Dadurch kann das Fahrzeug leicht in Y-Richtung zentriert werden. Die Muldenflanken sind hier bezüglich ihrer Neigung veränderbar und durch ein Paar von schwenkbaren Klappen 20 gebildet, die durch einen hier nicht dargestellten Mechanismus ebenfalls zwangssynchron und symmetrisch in Richtung der Schwenkpfeile zusammengefahren werden können, wobei das Fahrzeugrad in X-Richtung positioniert wird. Die schwenkbaren Klappen 20 können während des Transportes der Fahrzeuge oberflächenbündig in das Niveau der Abrollspuren abgesenkt werden. Die Vorgehensweise beim Positionieren eines in die zugehörige Arbeitsstation eingefahrenen Fahrzeuges ist ganz analog zu der im Zusammenhang mit Figur 7 geschilderten Verfahrensfolge.

Zweckmäßigerweise werden die verschwenkbaren Zentrierborde 25' den Radmulden zugeordnet, was bedeutet, daß das Fahrzeug in Längsrichtung X über die Räder der lenkbaren Fahrzeugachse positioniert wird. Wenn nämlich die Schwenkachsen 27 der Zentrierborde - im Grundriß gesehen - auf der Position der quer verlaufenden Mittellinie der Radmulden angeordnet sind, kann bei dieser Anordnung am einfachsten und wirkungsvollsten sichergestellt werden, daß diese Schwenkachsen auch auf der Position der Mittellinie der lenkbaren Fahrzeugräder liegt, was für eine betriebssichere und genaue Zentrierung dieser Fahrzeugachse wichtig ist.

Die Zentrierborde des der lenkbaren Fahrzeugachse 2 zugeordneten Zentriermechanismus' dürfen beim Zentrieren keine Bewegungskomponente in Längsrichtung vollführen, weil dies Rückwirkungen auf die Lenkung der Räder, auf deren Einschlagstellung und auf die Zentriergenauigkeit haben kann, was unerwünscht ist. Die schwenkbaren Zentrierborde müssen entlang einer - im Grundriß gesehen - quer zur Förderrichtung verlaufenden, geraden Linie verfahren werden. Deshalb ist der zugehörige Zentriermechanismus mit einer quer ausgerichteten Geradführung 28 für das Teil versehen ist, welches die Schwenkachsen 27 der zugehörigen Zentrierborde 25' trägt.

Durch die erfindungsgemäße Positionierung der Fahrzeuge werden diese in einer hinreichenden Genauigkeit in Längs- und Querrichtung positioniert, so daß gewisse Arbeiten, z.B. das Applizieren von Schutzfolie, in diesem Zustand ohne weiteres automatisiert durchgeführt werden können. Eine reproduziergenaue Positionierung der Karosserie bezüglich der Vertikalrichtung ist aufgrund gewisser Luftdruckunterschiede in den Reifen und aufgrund unterschiedlicher Einfederungszustände nicht mit der gleichen Genauigkeit durchführbar. Sollten andere automatisiert durchzuführenden Arbeiten eine exakte Höhenpositionierung und/oder eine noch genauere Längs- und Querpositionierung, als erfindungsgemäß möglich, erforderlich machen bzw. voraussetzen, so muß in der betreffenden Arbeitsstation eine mechanische Vorrichtung vorgesehen sein, die mit Zentrierzapfen in die karosserieseitigen Wagenheberbuchsen einfährt und dabei das Fahrzeug bezüglich aller drei Raumrichtungen noch genauer ausrichtet und positioniert. Dank der hinreichend genauen Positionierung des Fahrzeuges durch die erfindungsgemäße Vorrichtung ist diese noch genauere Positionierung des Fahrzeuges sehr rasch herbeiführbar. Das Fahrzeug ist dabei auch mechanisch sicher fixiert und kann bei Krafteinwirkung auf das Fahrzeug durch den Bearbeitungsvorgang nicht unkontrolliert nachgeben. Diese zusätzliche Positionier- und Fixiereinheit muß funktionell mit den Fördersträngen und den Positioniereinheiten in der Weise steuerungstechnisch gekoppelt sein, daß die zusätzliche Positionier- und Fixiereinheit nach einem Förderhub als letzte von den genannten Einheiten die Karosserie fixiert und nach Beendigung der Arbeit und vor einem neuen Förderhub als erste die Karossen wieder freigibt.

Nachfolgend soll unter Bezugnahme auf die in Figur 10 dargestellte, andere Basisversion der Erfindung eingegangen werden. Als Förderstränge 12' zum Befördern der Fahrzeuge 1 durch die Bearbeitungslinie von Arbeitsstation 11' zu Arbeitsstation ist ein Paar von Plattenbändern 32 vorgesehen. Die einzelnen Plattenbänder sind aus einer Vielzahl einzelner Platten 35 zusammengesetzt, die über Gelenke 38 scharnierartig miteinander verbunden sind. Die nach Art einer Kette zusammenhängenden Platten sind über Umlenkräder in einer endlos-geschlossen Schlaufe verlegt, die über eines der Umlenkräder in Förderrichtung angetrieben werden kann. Das Trum des Plattenbandes, welches in Förderrichtung durch die Bearbeitungslinie hindurchbewegt wird, ist bezüglich der Oberseite der Platten etwa oberflächenbündig mit dem Arbeitsboden verlegt. Zu diesem Zweck ist beim dargestellten Ausführungsbeispiel eine Führungsrinne 33 in den Arbeitsboden eingelassen, deren Grund eine Führungsschiene 34 bildet. Auf dieser können die Stützrollen 39 der einzelnen Platten bei geringem Widerstand abrollen und dabei gleichwohl hohe Traglasten aufnehmen.

Erfindungsgemäß sind in den rechten und den linken Gliederverband der Plattenbänder 32 jeweils mehrere Radmulden 36 und Radaufstandsplatten 37 integriert, die gemeinsam mit den Plattenbändern von Arbeitsstation 11' zu Arbeitsstation bewegt werden. Die Radmulden 36 und die Radaufstandsplatten 37 entsprechen in ihrer Funktion und Wirkungsweise der in Figur 3 gezeigten und unter Bezugnahme auf die dortige Darstellung beschrieben Ausgestaltung, so daß in soweit auf die obigen Ausführungen verwiesen werden kann. Voraussetzung für eine Integration der Radmulden und der Radaufstandsplatten in den Gliederverbund der Plattenbänder ist, daß die Abstände der Arbeitsstationen in der betreffenden Bearbeitungslinie und die Abstände der Radmulden innerhalb des Gliederverbundes der Plattenbänder einem gemeinsamen Raster entsprechen. Im einfachsten Fall sind die Arbeitsstationen innerhalb der Bearbeitungslinie äquidistant angeordnet und die Abstände der im Gliederverbund aufeinander folgenden Radmulden stimmen mit den Stationsabständen überein. In einem etwa dem Achsabstand A der Fahrzeuge entsprechenden Abstand ist hinter jeder Radmulde 36 eine Radaufstandsplatte 37 in den Gliederverbund integriert. Sowohl die Radmulden 36 als auch die Radaufstandsplatten 37 sind - wie die übrigen Platten 35 des Gliederverbundes auch - mittels Stützrollen 39 auf der Führung 34 der Plattenbänder 32 fahrbar abgestützt.

Ein einmal in einem Paar von Radmulden bzw. auf einem Paar von Radaufstandsplatten der Plattenbänder 32 aufgesetztes Fahrzeug bleibt währen des gesamten Durchlaufes durch die Bearbeitungslinie auf diesen Radmulden und Radaufstandsplatten stehen. Eine Relativverschiebung der Fahrzeuge in Förderrichtung X zu den Plattenbändern ist aufgrund der Radmulden nicht möglich. Zum Positionieren der auf den Plattenbändern beförderten Fahrzeugen in den zugehörigen Arbeitsstationen bezüglich der X-Richtung wird der Antrieb der Plattenbänder positionsgenau stillgesetzt.

Bei neuen, noch nicht verschlissenen Plattenbändern wird dadurch für alle Arbeitsstationen eine gute Positioniergenauigkeit erreicht. Mit zunehmendem Alter der Plattenbänder tritt jedoch in den Gelenken 38 des Gliederverbundes und an den Antriebsrädern ein Verschleiß ein, der in seiner Kumulierung über die Große Anzahl von Gelenkstellen zu größeren Toleranzen bei der Positionierung führen kann. Zur Vermeidung solcher Ungenauigkeiten ist in jeder Arbeitsstation 11' jeweils eine Verriegelungsvorrichtung vorgesehen, mit der die in den umlaufenden Gliederverband integrierten Radmulden 36 nicht nur jeweils selbsttätig mechanisch verriegelt, sondern zuvor auch noch exakt in Förderrichtung X positioniert werden können. Dadurch können verschleißbedingte oder durch Teilungsfehler der einzelnen Glieder 35 oder Antriebsräder bedingte Positionierungsfehler ausgeglichen und beseitigt werden. Zu diesem Zweck ist im Boden einer jeden Arbeitsstation unterhalb der beiden Führungsschienen 34 für die Plattenbänder jeweils ein Verriegelungsstift 40 vorgesehen, der beim dargestellten Ausführungsbeispiel vertikal beweglich in einer ortsfesten Führungsbuchse geführt ist. Er ist beispielsweise durch einen Betätigungsmagneten 41 ferngesteuert bewegbar. Selbstverständlich sind auch andere Betätigungsmechanismen und Servoenergien wie z.B. Pneumatik oder Hydraulik denkbar. Unterseitig ist in jeder Radmulde 36 eine Verriegelungsöffnung 42 zur spielarmen Aufnahme des Verriegelungsstiftes vorgesehen. Damit der Verriegelungsstift die muldenseitige Öffnung auch bei einer gewissen Fehlstellung sicher finden kann, ist der Verriegelungsstift 40 stirnseitig konisch ausgebildet, so daß er bei axialer Anpressung an den Rand der Verriegelungsöffnung die Radmulde in die richtige Position abdrängt, in der Stift 40 und Öffnung 42 zueinander fluchten. Durch diesen Vorgang wird die Radmulde selbsttätig in die richtige Längsposition gedrängt. Da eine etwaige Fehlausrichtung der Radmulde bezüglich der Querrichtung nicht korrigiert zu werden braucht, ist der Verriegelungsstift 40 im Querschnitt zweckmäßigerweise rechteckig und die Verriegelungsöffnung als in Querrichtung sich erstrekkendes Langloch ausgebildet, wobei nur die in Förderrichtung X liegenden Maße von Stift 40 und Öffnung 42 zueinander passen und in Querrichtung Y ein großes Spiel zwischen beiden vorhanden ist.

Sobald nach einem Förderhub der auf den Plattenbändern stehenden Fahrzeugen die Plattenbänder zum Stillstand gekommen sind, werden alle Verriegelungsstifte der Bearbeitungslinie aus der abgesenkten, strichliert dargestellten Freigabeposition in die in vollen Linien dargestellte, angehobene Verriegelungsposition gefahren, in der sie auch währen der gesamten Bearbeitungsphase verbleiben. Zum Weiterfahren der Plattenbänder 32 werden die Verriegelungsstifte aller Arbeitsstationen 11' gemeinsam fernbetätigt entriegelt.

Damit die Plattenbänder 32 trotz der in den umlaufenden Gliederverband integrierten Radaufstandsplatten 37 und/oder der integrierten Radmulden 36 ohne weiters über die erforderlichen Umlenkräder hinwegbewegt werden können, sind beim dargestellten Ausführungsbeispiel die Radaufstandsplatten 37 und die Radmulden 36 jeweils mehrteilig ausgebildet. Auch die Tragrollen der Radaufstandsplatten sind entsprechen geteilt. Die einzelnen Teile 37', 37" der Radaufstandsplatte und die Teile 36', 36" der geteilten Radmulde sind in der gleichen Art wie die einzelnen Platten 35 der Plattenbänder 32 mittels Gelenken 38 scharnierartig miteinander verbunden.

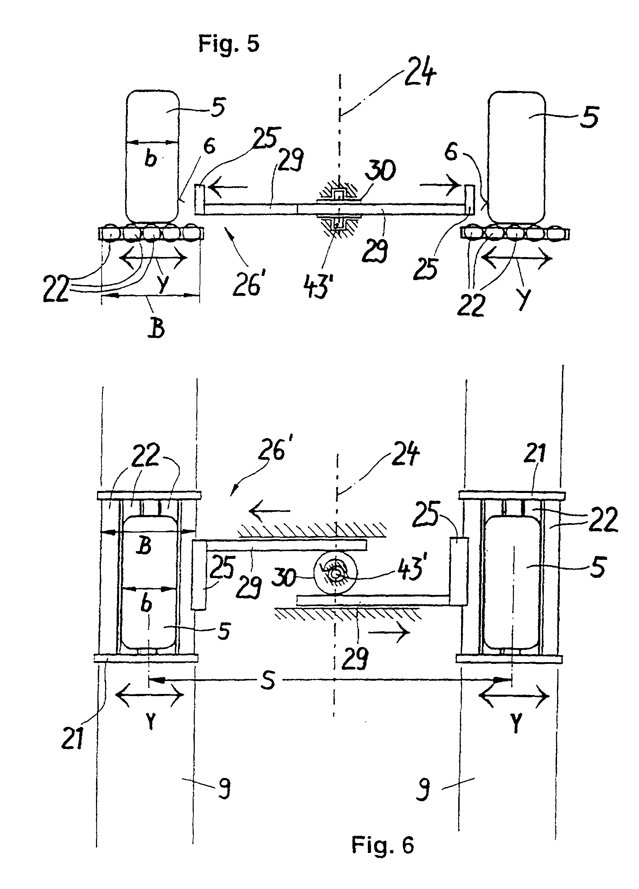

Nachfolgend soll noch auf die in verschieden Ausführungsbeispielen in Figur 4, in den Figuren 5 und 6 sowie in Figur 9 gezeigten Zentriermechanismen 26, 26' 26" zum Zentrieren und Ausrichten der Fahrzeuge parallel und symmetrisch zur Mittellinie der Arbeitsstation näher eingegangen werden, von denen für jede Fahrzeugachse 2 und 3 jeweils ein Zentriermechanismus, also in jeder Arbeitsstation 11, 11' jeweils zwei Zentriermechanismen vorgesehen ist bzw. sind. Die Zentriermechanismen sind in beiden erwähnten Basisversionen (Figur 1 bis 8 bzw. Figur 10) stationär in den Arbeitsstationen 11 bzw 11' angeordnet.

Übereinstimmend gehen alle Zentriermechanismen von einem mittig auf der Position der Mittellinie 24 der Arbeitsstation gelagerten Führungsglied 43, 43' bzw. 43a/43b aus. Darauf bauen nach unterschiedlichen Richtungen zwei gleichartige, kinematische Teil-Getriebe auf, die untereinander symmetrisch aufgebaut sind und von denen jedes an seinem Abtriebsglied einen Zentrierbord 25 bzw. 25' trägt. Die beiden zusammengehörigen kinematischen Teil-Getriebe sind über das mittige Führungsglied derart zwangsweise miteinander gekoppelt, daß beide Teil-Getriebe nur im Ausmaß gleichgroße aber einander entgegen gerichtete Bewegungen ausführen können. Und zwar ist die symmetrische Bewegung der beiden Teil-Getriebe unabhängig davon, ob eine die Teil-Getriebe in Bewegung setzende Kraft unsymmetrisch in eines der Teil-Getriebe oder ob sie symmetrisch mittig eingeleitet wird. Die Bewegungssymmetrie der beiden Teil-Getriebe ist ferner unabhängig davon, ob die von den Abtriebsgliedern der beiden Teil-Getriebe zu überwindenden Widerstände gleichgroß oder stark unterschiedlich sind.

Bei den beiden in Figur 4 dargestellten Zentriermechanismen 26 ist das mittige Führungsglied 43 als ein Führungsbolzen ausgebildet, der parallel zur Mittellinie 24 axialbeweglich geführt ist. Aufgrund einer Verbindung des Führungszapfens mit der Kolbenstange eines Antriebszylinders 44 ist der Führungszapfen zugleich in Axialrichtung pneumatisch oder hydraulisch antreibbar. An dem Führungszapen ist ein Gelenk mit einer vertikalen Schwenkachse befestigt, an dem zwei gleichlange, knicksteife Koppelstangen 45 gelenkig angeschlagen sind, die sich symmetrisch nach unterschiedlichen Seiten von der Mittellinie weg erstrecken. Das andere Ende der Koppelstangen ist jeweils mit einem quer zur Mittellinie 24 linear geführten Hubzapfen 46 gelenkig verbunden, der seinerseits etwa mittig unterhalb der Radmulde 15 bzw. der Radaufstandsplatte 21 in einer Geradführung axialbeweglich gelagert ist. Jeder Hubzapfen 46 schließlich trägt jeweils einen Zentrierbord 25 bzw. 25'. Durch Längsverschieben des Führungszapfens 43 mittels des Antriebszylinders 44 in der einen oder anderen Richtung können die beiden zugehörigen Hubzapfen 46 und mit ihnen die Zentrierborde 25, 25' symmetrisch in Querrichtung verschoben werden.

Bei den beiden in den Figuren 5 und 6 dargestellten Ausführungsbeispielen eines Zentriermechanismus' 26' ist das mittige Führungsglied 43' als ein Lagerzapfen eines drehbar gelagerten Zahnradritzels 30 ausgebildet, der bzw. das positionsgleich zur Mittellinie 24 ortsfest gelagert ist, wobei die Lagerung - in Längsrichtung gesehen - etwa mittig unterhalb der Radmulde bzw. der Radaufstandsplatte 21 angeordnet ist. An diametral liegenden Umfangsstellen des Zahnradritzels 30 greifen Zahnstangen 29 in die Verzahnung des Ritzels ein, wobei die Verzahnung und der Zahneingriff jedoch zeichnerisch nicht dargestellt sind. Anstelle einer Verzahnung bzw. eines gegenseitigen Zahneingriffes kann auch ein schlupffreies Abrollen zwischen Stange 29 und dem ortsfest gelagerten Rad 30 durch straff gespannte Abrollbänder sichergestellt werden, die in entgegengesetzten Richtungen um das Rad 30 herumgeschlungen und endseitig auf der Abrollfläche der Stange 29 befestigt sind. Die beiden diametral an dem Rad bzw. Zahnradritzel 30 angreifenden Stangen 29 sind in einer linearen Geradführung quer zur Mittellinie 24 geführt und axialbeweglich gelagert. Sie tragen an ihren Enden die bereits erwähnten Zentrierborde 25. Durch das ortsfest drehbar gelagerte Rad bzw. Zahnradritzel 30 und durch dessen schlupffreien Abrolleingriff mit den beiden Stangen 29 wird mechanisch sichergestellt, daß eine irgendwo in eines der verbundenen Teile eingeleitete Bewegung umgesetzt wird in zwei gleichgroße aber entgegen gerichtete Bewegungen der beiden Stangen 29 und der Zentrierborde. Der Bewegungsantrieb zur Einleitung einer solchen Bewegung ist beim Ausführungsbeispiel der Figuren 5 und 6 nicht dargestellt. Denkbar ist, daß das Zahnradritzel 30 durch einen geeigneten langsamen Drehantrieb mit begrenztem Drehmoment angetrieben wird. Denkbar ist auch, daß eine der Stangen 29 durch einen Antriebszylinder pneumatisch oder hydraulisch linear angetrieben wird.

Bei dem in Figur 9 einzeln dargestellten Ausführungsbeispiel eines Zentriermechanismus' 26" ist das mittige Führungsglied mehrteilig ausgebildet. Entsprechend der insgesamt rautenförmigen Ausbildung der beiden zusammegehörigen kinematischen Teil-Getriebe, die aus vier gleichlangen, gelenkig verbundenen, knicksteifen Koppelstangen 47 gebildet sind, müssen zwei diametral gegenüber liegende Eckgelenke auf der Mittellinie festgelegt werden, wofür zum einen ein ortsfestes Lager 43a und zum anderen ein längsbeweglich geführtes Lager 43b vorgesehen sind. Aufgrund dieser mittigen Festlegung zweier Eckpunkte des rautenförmigen Gelenkvierecks bewegen sich die beiden anderen Eckpunkte in gleichem Ausmaß aber entgegengesetzt in Querrichtung Y. An diesen beiden Eckpunkten des Gelenkviereckes sind die Zentrierborde 25 angelenkt. Damit sich, wie es bei den Fahrzeugachsen mit nicht-lenkbaren Fahrzeugrädern erforderlich ist, die Zentrierborde nicht verschwenken können, sondern sich nur parallel verlagern, sind noch zwei Parallelogrammlenker 48 versetzt zu den Koppelstangen 47 an den Zentrierborden angelenkt, die um den gleichen Versatz auf der Mittellinie ortsfest gelagert sind. Bei diesem Ausführungsbeispiel greift der Antriebszylinder 44' unmittelbar an den beiden gegenüberliegenden Zentrierborden an. Der beschriebene Zentriermechanismus braucht hier die Antriebsbewegung nicht mehr in eine Abtriebsbewegung umzusetzen, sondern er muß lediglich noch sicherstellen, daß die eingeleitete Bewegung gleichmäßig und symmetrisch auf die beiden gegenüberliegenden Zentrierborde verteilt wird. Der Zentriermechanismus wird bei dieser Art der Einleitung der Antriebsbewegung nur noch bei stark unterschiedlichen Widerständen der einen gegenüber der anderen Seite mechanisch belastet.

## Patentansprüche

1. Vorrichtung zum intermittierenden Befördern und Positionieren von auf den eigenen Rädern stehenden Fahrzeugen entlang einer wenigstens eine Arbeitsstation (11) umfassenden Bearbeitungslinie (10), mit zwei parallel nebeneinander in einem der Spurweite der Fahrzeuge entsprechenden Abstand bodennah angeordneten Fördersträngen (12,12') für die Fahrzeugräder (5), mittels denen die Fahrzeuge durch die Bearbeitungslinie hindurch beförderbar sind und das Niveau der Förderstränge (12, 12') überragende Zentriereinrichtungen (25, 25'), die an spiegelbildlichen Seiten der beiden Fahrzeugreifen (5) einer Fahrzeugachse anlegbar sind und jeweils mit einem Zentriermechanismus (25, 25') versehen sind mit dem die beiden paarweise gegenüberliegenden Zenriereinrichtung (25, 25') zwangssynchron und symmetrisch zur Mittellinie (24) der Bearbeitungslinie (10) verfahrbar sind,
**gekennzeichnet durch** die Gemeinsamkeit folgender Merkmale:
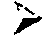 in jedem der Förderstränge (12, 12') ist für den Bereich der bzw. jeder Arbeitsstation (11) je eine prismatische, quer zur Förderichtung ausgerichtete Radmulde (15, 15', 15", 15, 36) angeordnet, die in den Fördersträngen (12, 12') untereinander positionsgleich und entsprechend der Sollposition des Fahrzeuges (1) bzw. der betreffenden Fahrzeugachse (2, 3) innerhalb der bzw. jeder Arbeitsstation (11, 11') angeordnet sind und die im Querschnitt so geformt sind, daß darin jeweils die verschieden großen Fahrzeugreifen (5) aller in der Bearbeitungslinie (10) vorkommenden Fahrzeugtypen positionsgenau aufnehmbar sind,
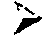 die Radmulden (15, 15', 15", 15., 36) sind derart ausgebildet, daß der Fahrzeugreifen (5) des darin aufgenommene Fahrzeugrades in Querichtung (Y) verschiebbar abgestützt ist,
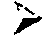 in jedem der Förderstränge (12, 12') ist im Abstand (A) der Fahrzeugachsen (2, 3) von den Radmulden (15, 15', 15", 15,, 36) ferner je eine Radaufstandsplatte (21, 21', 37) angeordnet, die jeweils als eine quer schwimmend geführte Platte ausgebildet oder **durch** eine Schar von parallelen, mit den Drehachsen in Förderrichtung (X) ausgerichteten Tragrollen (22, 22') gebildet ist,
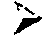 die Radaufstandsplatten (21, 21', 37) decken die verschiedenen Achsabstände (A) aller in der Bearbeitungslinie (10) vorkommenden Fahrzeugtypen **dadurch** ab, daß sie in Förderrichtung (X) länger bemessen sind (Maß L), als der Länge der Aufstandsfläche des Reifens (5) zuzüglich mindestens der Differenz (D) zwischen größtem und kleinstem vorkommenden Achsabstand (A) entspricht,
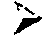 die quer (Richtung Y) zur Förderrichtung gemessene Breite der Förderstränge (12, 12'), die Breite (B) der Radmulden (15, 15', 15", 15,, 36) und die Breite der Radaufstandsplatten (21, 21', 37) sind unter Berücksichtigung ihres gegenseitigen Querabstandes jeweils so groß bemessen, daß die verschiedenen Spurweiten (S) und die verschiedenen Reifenbreiten (b) aller in der Bearbeitungslinie (10) vorkommenden Fahrzeugtypen abgedeckt werden,
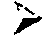 in der bzw. jeder Arbeitsstation (11, 11') ist sowohl den beiden zur Arbeitsstation gehörigen Radmulden (15, 15', 15", 15, 36) als auch den beiden zugehörigen Radaufstandsplatten (21, 21', 37) einer jeden Arbeitsstation (11, 11') jeweils ein Paar von beweglich geführten, Zentrierborden (25, 25') zugeordnet.

2. Vorrichtung nach Anspruch 1,
**gekennzeichnet durch** die Gemeinsamkeit folgender Merkmale:
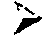 von den beiden die Fahrzeugräder (5) tragenden, die Fahrzeuge (1) **durch** die Bearbeitungslinie (10) hindurch befördernden Förderstränge (12) ist zumindest eine als Schleppkettenförderer ausgebildet,
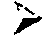 der Schleppkettenförderer weist ein Paar von Schleppketten (13) auf, die in einem größer als der maximal auftretenden Radbreite (b) entsprechenden Abstand (B) - einer Abrollspur (9) für die Fahrzeugräder (5) der entsprechenden Fahrzeugseite bodennah folgend - parallel nebeneinander gemeinsam in einer endlosen Schlaufe verlegt und in Förderrichtung (X) angetrieben sind,
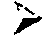 die beiden Schleppketten (13) des Schleppkettenförderers sind mit mehreren Mitnehmern (14) versehen, von denen jeweils ein Mitnehmer (14) am Reifenumfang eines Fahrzeugrades (5) eines beförderten Fahrzeuges (1) schubwirksam anlegbar ist,
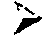 soweit einer der Förderstränge (12, 12') nicht als Schleppkettenförderer ausgebildet ist, ist er als einfache Abrollspur (9) für die Fahrzeugräder (5) der entsprechenden Fahrzeugseite ausgebildet,
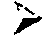 jeder Arbeitsstation (11) der Bearbeitungslinie (10) ist jeweils ein zugehöriger Satz von zwei Radmulden (15, 15', 15", 15,) und zwei Radaufstandsplatten (21, 21') stationär zugeordnet.

3. Vorrichtung nach Anspruch 1,
**dadurch gekennzeichnet, daß**
die der lenkbaren Fahrzeugachse (2) zugeordneten Zentrierborde (25') um eine vertikale Schwenkachse (27) schwenkbar an dem Zentriermechanismus (26) gehaltert sind, welche Schwenkachse (27) - im Grundriß gesehen - etwa auf der Position der quer verlaufenden Mittellinie (4) der lenkbaren Fahrzeugachse (2) des positioniert aufgenommenen Fahrzeuges (1) angeordnet ist.

4. Vorrichtung nach Anspruch 3,
**dadurch gekennzeichnet, daß**
die um eine vertikale Schwenkachse (27) verschwenkbaren Zentrierborde (25') den Radmulden (15, 15', 15", 15,) zugeordnet sind, wobei die Schwenkachsen (27) - im Grundriß gesehen - etwa auf der Position der quer verlaufenden Mittellinie der Radmulden (15, 15', 15", 15,) angeordnet sind.

5. Vorrichtung nach Anspruch 3,
**dadurch gekennzeichnet, daß**
wenigstens der der lenkbaren Fahrzeugachse (2) zugeordnete Zentriermechanismus (26) mit einer Geradführung (28) für das die Schwenkachsen (27) der zugehörigen Zentrierborde (25') tragende Teil versehen ist, derart, daß die Schwenkachsen (27) bei der Querbewegung der beiden gegenüberliegenden Zentrierborde (25') entlang einer - im Grundriß gesehen - quer zur Förderrichtung verlaufenden, geraden Linie verfahrbar sind.

6. Vorrichtung nach Anspruch 1,
**dadurch gekennzeichnet, daß**
die den Radaufstandsplatten (21, 21') zugeordneten Zentrierborde (25) annähernd so lang wie die Radaufstandsplatten (21, 21', Maß L) sind.

7. Vorrichtung nach Anspruch 1,
**dadurch gekennzeichnet, daß**
die den Radaufstandsplatten (21, 21') zugeordneten Zentrierborde (25) unbeweglich mit dem zugehörigen Zentriermechanismus (26, 26', 26") verbunden sind.

8. Vorrichtung nach Anspruch 1,
**dadurch gekennzeichnet, daß**
die Zentrierborde (25, 25') in einem solchen gegenseitigen Querabstand angeordnet sind, daß sie an die innenseitigen Reifenflanken (6) zentrierend anlegbar und zum Zentrieren der Fahrzeugräder (5) von der Mitte (24) weg nach außen verfahrbar sind.

9. Vorrichtung nach Anspruch 1,
**dadurch gekennzeichnet, daß**
die geneigten, die Radlast aufnehmenden Flanken (16) der Radmulden (15) bezüglich ihrer Neigung und/oder ihres gegenseitigen Abstandes unbeweglich angeordnet und als quer schwimmend geführte Platten ausgebildet oder durch eine Schar von parallelen Tragrollen (18) gebildet sind, deren Drehachsen - im Grundriß gesehen - parallel zur Förderrichtung (X) ausgerichtet sind.

10. Vorrichtung nach Anspruch 1,
**dadurch gekennzeichnet, daß**
die Flanken der Radmulden (15', 15", 15,) bezüglich ihrer Neigung oder bezüglich ihres gegenseitigen Abstandes beweglich ausgebildet sind und daß der die Radlast aufnehmende, horizontale Boden (17) der Radmulden (15', 15", 15,) als quer schwimmend geführte Platte ausgebildet oder durch eine Schar von parallelen Tragrollen (18') gebildet ist, deren Drehachsen parallel zur Förderrichtung ausgerichtet sind.

11. Vorrichtung nach Anspruch 1,
**dadurch gekennzeichnet, daß**
die beiden die Fahrzeugräder (5) tragenden, die Fahrzeuge (1) durch die Bearbeitungslinie hindurch befördernden Förderstränge (12') als Schuppen- oder Plattenbänder (32) ausgebildet sind und in gleichmäßigem, dem Abstand der aufeinander folgenden Arbeitsstationen (11') entsprechendem Abstand - in den umlaufenden Gliederverband der Schuppen- oder Plattenbänder (32) integriert - mehrere fahrbar (Stützrollen 39) auf der Führung (34) der Schuppen- oder Plattenbänder (32) abgestützte Radmulden (36) und mehrere ebenfalls fahrbar abgestützte Radaufstandsplatten (37) enthalten.

12. Vorrichtung nach Anspruch 11,
**dadurch gekennzeichnet, daß**
in der bzw. jeder Arbeitsstation (11') jeweils eine Vorrichtung (40 - 42) zur selbsttätigen mechanischen Verriegelung und exakten Positionierung der in den umlaufenden Gliederverband der Schuppen- oder Plattenbänder (32) integrierten, auf der Bandführung (34) fahrbaren Radmulden (36) vorgesehen ist, die beim Weiterfahren der Schuppen- oder Plattenbänder (32) für alle Arbeitsstationen (11') gemeinsam fernbetätigt entriegelbar sind.

13. Vorrichtung nach Anspruch 11,
**dadurch gekennzeichnet, daß**
die in den umlaufenden Gliederverband der Schuppen- oder Plattenbänder (32) integrierten Radaufstandsplatten (37) und/oder die integrierten Radmulden (36) jeweils mehrteilig ausgebildet sind, wobei die einzelnen Teile (37', 37" oder 36', 36") einer jeden Radaufstandsplatte (37) oder einer jeden geteilten Radmulde (36) in der gleichen Art wie die einzelnen Platten (35) oder die einzelnen Schuppen der Platten- bzw. Schuppenbänder (32) gelenkig (Gelenk 38) miteinander verbunden sind.

14. Vorrichtung nach Anspruch 1,
**dadurch gekennzeichnet, daß**
in einer Arbeitsstation eine Vorrichtung zum mechanischen Fixieren der Karosserie des positionierten Fahrzeuges vorgesehen ist, die Zentrierstiffte aufweist, die in karosserieseitige Wagenheberbuchsen axial einfahren und dadurch die Fahrzeugkarosserie bezüglich aller drei Raumrichtungen noch genauer positionieren.

## Claims

1. System for intermittently conveying and positioning vehicles standing on their own wheels along a production line (10) incorporating at least one work station (11), having two parallel conveyor lines (12, 12') for the vehicle wheels (15) arranged close to the floor adjacent to one another and spaced apart by a distance corresponding to the track width of the vehicles, by means of which the vehicles can be conveyed through the production line, and centring mechanisms (25, 25') projecting beyond the level of the conveyor lines (12, 12'), which may be placed against mirror-image sides of the two vehicle tyres (5) of a vehicle axle and respectively provided with a centring mechanism (25, 25') by means of which the two oppositely lying centring mechanisms (25, 25') can be displaced in pairs in forced synchronisation and symmetrically relative to the centre line (24) of the production line (10),
**characterised by** the following common features:
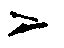 in each of the conveyor lines (12, 12') a prismatic wheel recess (15, 15', 15", 15,, 36) disposed transversely to the direction of conveyance is provided for the region of the or each work station (11), being arranged in the conveyor lines (12, 12') so that they are all disposed in the same position relative to one another and corresponding to the desired position of the vehicle (1) and the relevant vehicle axle (2, 3) within the or each work station (11, 11'), the cross section thereof being shaped so that respective differently sized vehicle tyres (5) of all types of vehicle which might be processed in the production line (10) can be received therein in an exact position,
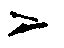 the wheel recesses (15, 15', 15", 15,, 36) are designed so that the vehicle tyre (5) of the vehicle wheel received therein is supported so as to be displaceable in the transverse direction (Y),
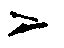 additionally arranged in each of the conveyor lines (12, 12'), in the distance (A) of the vehicle axles (2, 3) from the wheel recesses (15, 15', 15", 15,, 36), is a respective wheel stand plate (21, 21', 37), each of which is provided in the form of a transversely floating, guided plate or a pair of parallel supporting rollers (22, 22') with rotation axes aligned in the direction of conveyance (X),
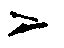 the wheel stand plates (21, 21', 37) cover the different axial distances (A) of all types of vehicle which might be handled in the production line (10), being dimensioned (dimension L) so as to be longer in the direction of conveyance (X) than the length of the standing surface of the tyre (5) plus at least the difference (D) between the largest and smallest axial distance (A) which might be handled,
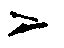 the width of the conveyor lines (12, 12') as measured transversely (direction Y) to the direction of conveyance, the width (B) of the wheel recesses (15, 15', 15", 15,, 36) and the width of the wheel stand plates (21, 21', 37) are respectively dimensioned, taking account of their reciprocal transverse spacing, so that the different track widths (S) and the different tyre widths (b) of all vehicle types which might be handled in the production line (10) can be accommodated,
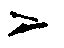 in the or each work station (11, 11'), a pair of displaceable, guided centring boards (25, 25') is assigned, respectively, to both the two wheel recesses (15, 15', 15", 15,, 36) belonging to the work station and the two associated wheel stand plates (21, 21', 37) of every work station (11, 11').

2. System as claimed in claim 1,
**characterised by** the following common features:
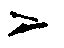 at least one of the two conveyor lines (12) supporting the vehicle wheels (5) and conveying the vehicles (1) through the production line (10) is a drag line conveyor,
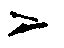 the drag line conveyor has a pair of drag lines (13) which are displaced together, in parallel adjacent to one another in an endless loop, within a distance (B) - of a conveyor track (9) for the vehicle wheels (5) following close to the floor at the corresponding vehicle side - corresponding to the maximum wheel width (b) which might be handled, and are driven in the direction of conveyance (X),
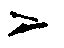 the two drag lines (13) of the drag line conveyor are provided with several drivers (14), one of which drivers (14) can be respectively applied against the tyre circumference of a vehicle wheel (5) of a conveyed vehicle (1) imparting a thrust action,
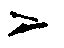 if one of the conveyor lines (12, 12') is not a drag line conveyor, it is a simple conveyor track (9) for the vehicle wheels (5) of the corresponding vehicle side,
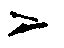 every work station (11) of the production line (10) is assigned a respective associated set of two stationary wheel recesses (15, 15', 15", 15,) and two stationary wheel stand plates (21, 21').

3. System as claimed in claim 1,
**characterised in that**
the centring boards (25') co-operating with the steerable vehicle axle (2) are retained on the centring mechanism (26) so as to be pivotable about a vertical pivot shaft (27), which pivot shaft (27) - as seen in plan view - is disposed more or less on the position of the transversely extending centre line (4) of the steerable vehicle axle (2) of the vehicle (1) received and positioned.

4. System as claimed in claim 3,
**characterised in that**
the centring boards (25') pivotable about a vertical pivot shaft (27) are assigned to the wheel recesses (15, 15', 15", 15,), the pivot shafts (27) - as seen in plan view - being disposed more or less on the position of the transversely extending centre line of the wheel recesses (15, 15', 15", 15,).

5. System as claimed in claim 3,
**characterised in that**
at least the centring mechanism (26) assigned to the steerable vehicle axle (2) is provided with a straight guide (28) for the part bearing the pivot shafts (27) of the co-operating centring boards (25') so that the pivot shafts (27) can be displaced along a straight line extending - as seen in plan view - transversely to the direction of conveyance when the two oppositely lying centring boards (25') are transversely displaced.

6. System as claimed in claim 1,
**characterised in that**
the centring boards (25) assigned to the wheel stand plates (21, 21') are approximately as long as the wheel stand plates (21, 21', dimension L).

7. System as claimed in claim 1,
**characterised in that**
the centring boards (25) assigned to the wheel stand plates (21, 21') are immovably joined to the co-operating centring mechanism (26, 26', 26").

8. System as claimed in claim 1,
**characterised in that**
the centring boards (25, 25') are disposed at a reciprocal transverse distance such that they can be applied against the inner-side tyre sides (6) in a centring action and can be displaced from the centre (24) outwards in order to centre the vehicle wheels (5).

9. System as claimed in claim 1,
**characterised in that**
the inclined sides (16) of the wheel recesses (15) receiving the wheel load are disposed so as to be immovable in terms of their inclination and/or their mutual spacing and are provided as guided, transversely floating plates or a pair of parallel support rollers (18), the rotation axes of which - as seen in plan view - are aligned parallel with the direction of conveyance (X).

10. System as claimed in claim 1,
**characterised in that**
the sides of the wheel recesses (15, 15", 15,) are designed so as to be displaceable in terms of their inclination or with regard to their mutual spacing and the horizontal floor (17) of the wheel recesses (15', 15", 15,) receiving the wheel load is provided as a guided, transversely floating plate or a pair of parallel support rollers (18'), the rotation axes of which are aligned parallel with the direction of conveyance.

11. System as claimed in claim 1,
**characterised in that**
the two conveyor lines (12') supporting the vehicle wheels (5) and conveying the vehicles (1) through the production line are apron or plate conveyors (32) and contain - integrated in the circulating linked units of the apron or plate conveyors (32) - at a same distance corresponding to the distance of consecutive work stations (11'), several wheel recesses (36) drivable (support rollers 39) on the guide (34) of the apron or plate conveyors (32) and several wheel stand plates (37) also supported in a drivable relationship.

12. System as claimed in claim 11,
**characterised in that**
the or each work station (11') is respectively provided with a device (40 - 42) for automatically mechanically locking and exactly positioning the wheel recesses (36) integrated in the circulating linked units of the apron or plate conveyors (32) and drivable on the conveyor guide (34), which is remotely operated so that it can be unlocked for all work stations (11') together when the apron or plate conveyors (32) are moved on.

13. System as claimed in claim 11,
**characterised in that**
the wheel stand plates (37) integrated in the circulating linked units of the apron or plate conveyors (32) and/or the integrated wheel recesses (36) are each made up of several parts, the individual parts (37', 37" or 36', 36") of every wheel stand plate (37) or every split wheel recess (36) being joined to one another in the same manner as the individual plates (35) or the individual aprons of the plate or apron conveyors (32) in an articulated arrangement (joint 38).

14. System as claimed in claim 1,
**characterised in that**
a device is provided at a work station for mechanically fixing the bodywork of the positioned vehicle, having centring pins which are axially inserted in bodywork-side car lifting bushes, by means of which the vehicle bodywork can be even more accurately positioned by reference to all three spatial directions.

## Revendications

1. Dispositif servant au transport intermittent et au positionnement de véhicules posés sur leurs propres roues le long dune ligne de traitement (10) comprenant au moins un poste de travail (11), comprenant deux bandes transporteuses (12, 12') prévues pour les roues (5) des véhicules et disposées prés du sol en étant placées Tune à côté de l'autre de façon parallèle, suivant un écartement correspondant à l'écartement des roues des véhicules, bandes transporteuses à l'aide desquelles les véhicules peuvent être transportés à travers la ligne de traitement, et des dispositifs de centrage (25, 25') dépassant le niveau des bandes transporteuses (12, 12'), lesquels dispositifs de centrage peuvent être appliqués contre des côtés mutuellement symétriques des deux pneus (5) d'un essieu de véhicule et sont dotés à chaque fois d'un mécanisme de centrage (25, 25') à l'aide duquel les deux dispositifs de centrage (25, 25'), disposés par paire l'un en face de l'autre, peuvent être déplacés de façon coercitivement synchronisée et de façon symétrique par rapport à l'axe central (24) de la ligne de traitement (10),
**caractérisé par** l'ensemble des caractéristiques suivantes :
- dans chacune des bandes transporteuses (12, 12'), il est prévu, pour la zone du ou de chaque poste de travail (11), à chaque fois une auge prismatique de réception de roue (15, 15', 15'', 15''', 36), disposée transversalement par rapport à la direction de transport, lesquelles auges de réception de roue sont disposées dans les bandes transporteuses (12, 12') en ayant la même position Tune par rapport à l'autre et en correspondance avec la position théorique du véhicule (1) ou de l'essieu concerné (2, 3) du véhicule, à l'intérieur du ou de chaque poste de travail (11, 11'), et sont formées en section de façon telle, qu'à l'intérieur des auges de réception de roue, à chaque fois les pneus (5) du véhicule, de tailles différentes et de tous les types de véhicules se présentant dans la ligne de traitement (10), puissent être reçus de façon précise concernant la position,
- les auges de réception de roue (15, 15', 15'', 15''', 36) sont configurées de façon telle, que le pneu (5) de la roue du véhicule pris dans l'auge de réception de roue soit en appui de façon mobile dans la direction transversale (Y),
- dans chacune des bandes transporteuses (12, 12'), il est prévu, à une distance des auges de réception de roue (15, 15', 15'', 15''', 36) égale à l'écartement (A) entre les essieux (2, 3) du véhicule, à chaque fois une plaque de support de roue (21, 21', 37) qui est loujours configurée comme une plaque guidée transversalement de façon flottante ou qui est formée par un ensemble de rouleaux parallèles (22, 22') dont les axes de rotation sont orientées dans le sens de transport (X),
- les plaques de support de roue (21, 21', 37) s'adaptent aux différents empattements (A) de tous les types de véhicules se présentant dans la ligne de traitement (10), par le fait que les plaques de support de roue sont, dans le sans de transport (X), plus longues (dimension L) que ce qui correspond à la longueur de la surface de contact du pneu (5), plus au moins la différence (D) entre l'empattement (A) le plus grand et le plus petit,
- la largeur des bandes transporteuses (12, 12') mesurée transversalement (direction Y) par rapport à la direction de transport, la largeur (B) des auges de réception de roue (15, 15', 15'', 15''', 36) et la largeur des plaques de support de roue (21, 21', 37) sont à chaque fois dimensionnées, en tenant compte de leur écartement transversal mutuel, de façon telle que les différentes voies des roues (S) et les différentes largeurs des pneus (b) de tous les types de véhicules se présentant dans la ligne de traitement (10) soient reçues de façon adaptée,
- dans le ou dans chaque poste de travail (11, 11'), une paire de rebords de centrage (25, 25') guidés de façon mobile est à chaque fois associée aussi bien aux deux auges de réception de roue (15, 15', 15'', 15''', 36) faisant partie du poste de travail, qu'aux deux plaques de support de roue (21, 21', 37) correspondantes de chaque poste de travail (11, 11').

2. Dispositif selon la revendication 1, **caractérisé par** l'ensemble des caractéristiques suivantes :
- des deux bandes transporteuses (12) supportant les roues (5) du véhicule et transportant les véhicules (1) à travers la ligne de traitement (10), au moins une bande transporteuse est configurée comme un transporteur à chaînes d'entraînement,
- le transporteur à chaînes d'entraînement comprend une paire de chaînes d'entraînement (13) qui sont placées en étant parallèles Tune à l'autre et de façon commune dans une boucle sans fin, suivant un écartement (B) correspondant à plus que la largeur de roues (b) maximale se présentant -en suivant, prés du sol, une voie de roulement (9) pour les roues (5) du côté du véhicule correspondant -, lesdites chaînes d'entraînement étant entraînées dans le sens de transport (X),
- les deux chaînes d'entraînement (13) du transporteur à chaînes d'entraînement sont dotées de plusieurs taquets (14) parmi lesquels à chaque fois un taquets (14) peut être appliqué, en ayant un effet de poussée, contre la périphérie dune roue (5) d'un véhicule transporté (1),
- dans la mesure où une des bandes transporteuses (12, 12') n'est pas configurée comme un transporteur à chaînes d'entraînement, cette bande transporteuse est configurée comme une simple voie de roulement (9) pour les roues (5) du côté correspondant du véhicule,
- un jeu approprié de deux auges de réception de roue (15, 15', 15", 15''') et de deux plaques de support de roue (21, 21') est associé de façon fixe à chaque poste de travail (11) de la ligne de traitement (10).

3. Dispositif selon la revendication 1, **caractérisé en ce que** les rebords de centrage (25') associés à l'essieu directeur (2) du véhicule sont fixés sur le mécanisme de centrage (26) en pouvant pivoter autour d'un axe pivot vertical (27), lequel axe pivot (27) - vu en plan - est disposé à peu près sur la position de l'axe central (4), s'étendant transversalement, de l'essoel directeur (2) du véhicule (1) reçu en étant positionné.

4. Dispositif selon la revendication 3, **caractérisé en ce que** les rebords de centrage (25'), pouvant pivoter autour d'un axe pivot vertical (27), sont associés aux auges de réception de roue (15, 15', 15'', 15'''), les axes pivots (27) - vus en plan - étant disposés à peu près sur la position de l'axe central, s'étendant transversalement, des auges de réception de roue (15, 15', 15'', 15''').

5. Dispositif selon la revendication 3, **caractérisé en ce qu'**au moins le mécanisme de centrage (26), associé à l'essieu directeur (2) du véhicule, est doté d'un guidage rectiligne (28) pour la partie supportant les axes pivots (27) des rebords de centrage correspondants (25'), de façon telle que les axes pivots (27) puissent être déplacés lors du déplacement transversal des deux rebords de centrage opposés (25'), le long d'une droite - vue en plan - s'étendant transversalement par rapport à la direction de transport.

6. Dispositif selon la revendication 1, **caractérisé en ce que** les bords de centrage associés aux plaques de support de roue (21, 21') sont presque aussi longs que les plaques de support de roue (21, 21', dimension L).

7. Dispositif selon la revendication 1, **caractérisé en ce que** les rebords de centrage (25), associés aux plaques de support de roue (21, 21'), sont reliés de façon fixe au mécanisme de centrage correspondant (26, 26', 26").

8. Dispositif selon la revendication 1, **caractérisé en ce que** les rebords de centrage (25, 25') sont disposés suivant un écartement transversal mutual tel qu'ils puissent être appliqués, en centrant, sur le côté intérieur des flancs (6) du pneu et, pour le centrage des roues (5) du véhicule, puissent être déplacés vers l'extérieur, en s'éloignant du milieu (24).

9. Dispositif selon la revendication 1, **caractérisé en ce que** les flancs inclinés (16) des auges de réception de roua (15), recevant la charge des roues, sont disposés fixement concernant leur inclinaison et/ou leur écartement l'un par rapport à l'autre, et ce qu'ils sont confignrés comma des plaques guidées transversalement de façon flottante ou **en ce qu'**ils sont formés par un ensemble de rouleaux supports parallèles (18) dont les axes de rotation - vus en plan - sont orientés parallèlement au sens de transport (X).

10. Dispositif selon la revendication 1, **caractérisé en ce que** les flancs des auges de réception de roue (15', 15'', 15''') sont configurées en étant mobiles concernant leur inclinaison ou concernant leur écartement l'un par rapport à l'autre et **en ce que** le fond horizontal (17) des auges de réception de roue (15', 15'', 15'''), recevant la charge des roues, est configuré comme une plaque guidée transversalement de façon flottante ou est formé par un ensemble de rouleaux supports parallèles (18') dont les axes de rotation sont orientés parallèlement à la direction de transport.

11. Dispositif selon la revendication 1, **caractérisé en ce que** les deux bandes transporteuses (12') supportant les roues (5) des véhicules et transportant les véhicules (1) à travers la ligne de traitement sont configurées comme des transporteurs (32) à lamelles ou à tabliers, et **en ce que** les bandes transporteuses comprennent, suivant un écartement régulier correspondant à l'intervalle des postes de travail (11') qui se suivent, de façon intégrée dans l'assemblage circulant des éléments des transporteurs (32) à lamelles ou à tabliers, plusieurs auges de réception de roue (36) supportées de façon mobile (rouleaux d'appui 39) sur le guidage (34) des transporteurs (32) à lamelles ou à tabliers, et plusieurs plaques de support de roue (37) supportées également de façon mobile.

12. Dispositif selon la revendication 11, **caractérisé en ce qu'**il est prévu à chaque fois dans le ou dans chaque poste de travail (11'), un dispositif (40 - 42) servant au verrouillage mécanique automatique et au positionnement exact des auges de réception de roue (36) et intégrées dans l'assemblage circulant des éléments des transporteurs (32) à lamelles ou à tabliers mobiles sur le guidage (34), lesquelles auges de réception de roue sont déverrouillables de façon commune pour tous les postes de travail (11') et en étant commandées à distance lorsque les transporteurs (32) à lamelles ou à tabliers continuent à avancer.

13. Dispositif selon la revendication 11, **caractérisé en ce que** les plaques de support de roue (37) intégrées dans l'assemblage circulant des éléments des transporteurs (32) à lamelles ou à tabliers, et/ou les auges intégrées (36) de réception de roue, sont configurées à chaque fois en plusieurs éléments, les différents éléments (37', 37" ou 36', 36") de chaque plaque de support de roue (37) ou de chaque auge divisée (36) de réception de roue, sont raliés entre eux de façon articulée (articulation 38), de la même manière que les différents tabliers (35) ou les différentes lamelles des transporteurs (32) à tabliers ou à lamelles.

14. Dispositif selon la revendication 1, **caractérisé en ce qu'**il est prévu, dans un poste de travail, un dispositif servant à la fixation mécanique de la carrosserie du véhicule positionné, lequel dispositif comprend des goupilies de centrage qui rentrent axialement dans des logements pour cric, côté carrosserie, et **en ce que** les goupilles de centrage positionnent de façon encore plus précise la carrosserie du véhicule en référence à la totalité des trois directions dans l'espace.
